# EUROPEAN PATENT SPECIFICATION

(11) **EP 4 592 378 B1**
(45) Date of publication and mention of the grant of the patent: **10.06.2026**
(21) Application number: 24223381.5
(22) Date of filing: 27.12.2024
(51) Int. Cl.: C10J 3/72, B01J 4/00

(54) **INJECTOR FOR A GASIFICATION APPARATUS**
INJEKTOR FÜR EINE VERGASUNGSVORRICHTUNG
INJECTEUR POUR UN APPAREIL DE GAZÉIFICATION

(30) Priority: 26.01.2024 IT 202400001554
(43) Date of publication of application: 30.07.2025
(73) Proprietor: Societa' per Azioni Curti - Costruzioni Meccaniche, 48014 Castel Bolognese (RA) (IT)
(72) Inventor: BIDO, Vinicio, 45020 Lusia (Rovigo) (IT); TOSI, Cristian, 41016 Castelfranco Emilia (MO) (IT); BEDON, Matteo, 40138 Bologna (IT)
(74) Representative: Luppi Intellectual Property S.r.l.

(56) References cited:
- WO-A1-2019/155373
- CN-A- 111 171 878
- NL-C2- 2 002 856

## Description

### BACKGROUND OF THE INVENTION

This invention relates to an injector for a gasification apparatus, i.e. an apparatus for producing combustible gas by pyrolysis and/or gasification and/or biomass combustion, like, for example, wood chippings, i.e. wood reduced into chips, vegetable biomass or biomass in general in solid state, or any other solid matrix containing organic substances or carbon based, like for example refuse, in particular an injector for injecting a comburent and/or gasifying fluid like for example air, oxygen, steam, in the reactor.

### PRIOR ART

Injectors for gasifying apparatuses are known from the prior art that comprise a substantially cylindrical body comprising a central conduit, into which a gas containing oxygen is delivered and which terminates in an opening, placed at a distal end of the injector, through which the gas containing oxygen is delivered into the gasification apparatus. The central conduit is surrounded by a sleeve into which a cooling fluid is delivered that is used to cool the body of the injector, subject to the heat that develops in the combustion zone of the gasifying apparatus.

The cooling fluid delivered into the sleeve is discharged inside the gasification apparatus through openings made in the outer surface of the sleeve.

Injectors of this type are disclosed, for example, in WO2016/070700 A1, CN104632179 B, CN204082121 U and CN104632181 B.

In injectors of this type, the distal end of the injector, in which the opening is obtained through which the gas containing oxygen is delivered into the gasifying apparatus is subjected to high thermal stress because combustion is particularly active in the zone immediately adjacent to the distal end of the injector from which the gas containing oxygen is delivered to the gasifying apparatus.

The temperature of the proximal end of the injector can, despite the presence of the cooling fluid, even reach the melting point of the material out of which the injector is made or deform and damage the injector, making it no longer usable, in particular in the case of hot spots near the injector, inside the gasifying apparatus.

NL2002856 C2 discloses an air injector comprising a hollow body with side openings, having external cooling means.

### DESCRIPTION OF THE INVENTION

One object of this invention is to provide an injector, to inject a comburent and/or gasifying fluid into a gasification apparatus, in which there are no zones that are subject to particularly high thermal stress so as to avoid deformation or damage to the injector even in the presence of hot spots near the injector, inside the gasification apparatus.

The object of the invention is achieved with an injector according to claim 1.

Owing to the invention, it is possible to avoid certain zones of the injector possibly reaching temperatures that are too high with resulting deformation and damage that may make the injector unusable.

### BRIEF DESCRIPTION OF THE DRAWINGS

Further features and advantages of the invention emerge from the following disclosure of an embodiment of the invention, provided merely by way of non-limiting example with reference to the enclosed drawings, in which:

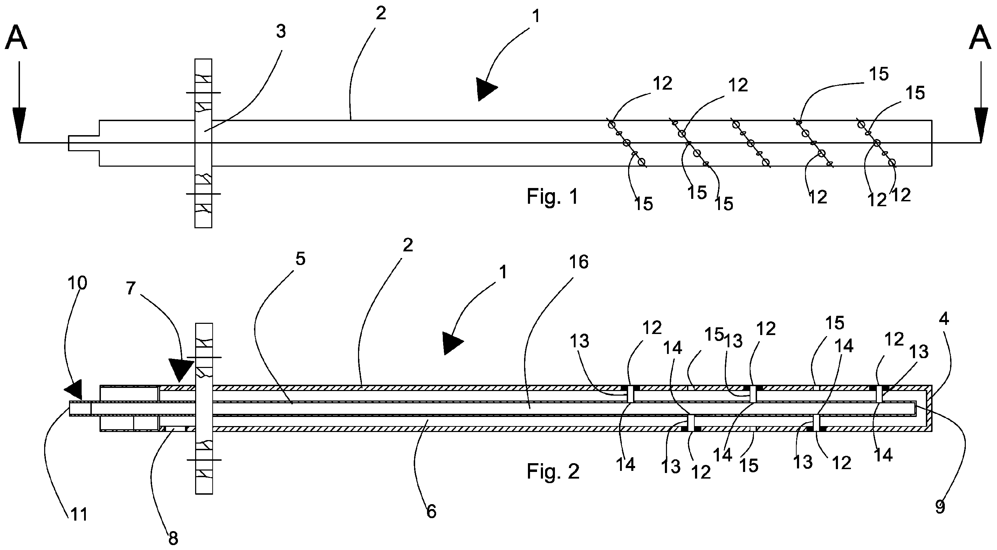

Figure 1 is a side view of an injector according to the invention;
Figure 2 is a section of the injector of Figure 1, along the line A-A in figure 1.

The injector 1 according to the invention comprises a hollow cylindrical body 2, provided with a flange 3, by which the injector 1 can be fixed to the wall of a gasification apparatus.

The hollow cylindrical body 2 is closed at a distal end 4 that, when the injector is fitted to a gasification apparatus, is inside the combustion zone of the gasification apparatus.

Inside the hollow cylindrical body 2 a hollow cylindrical element 5 is arranged in a concentric position, having a diameter less than the diameter of the hollow cylindrical body 2, so that a gap 6 is defined between the hollow cylindrical body 2 and the hollow cylindrical element 5.

The hollow cylindrical body 2 is provided, at a proximal end 7, opposite the distal end 4, with an opening 8, made on the side wall of the hollow cylindrical body 2 and communicating with the gap 6.

When the injector 1 is fitted to a gasification apparatus, the proximal end 7 of the hollow cylindrical body 2 is outside the gasification apparatus, so that the opening 8 is accessible from outside the gasification apparatus.

A cooling liquid, for example distilled water, can be delivered through the opening 8 into the gap 6 to cool the injector 1, during operation of the gasifying apparatus, in order to prevent the heat present inside the gasification apparatus from being able to damage the injector 1, for example by increasing in some zones the temperature of the hollow cylindrical body 2 even up to the melting temperature of the material, for example metal, with which the hollow cylindrical body 2 is made, and causing damage to and deformation of the injector 1, making the injector unusable.

The hollow cylindrical element 5 is closed at a distal end 9, which faces the distal end 4 of the hollow cylindrical body 2, and is separated therefrom by the gap 6, in which the cooling liquid circulates.

A cylindrical chamber 16 is defined inside the hollow cylindrical element 5.

A proximal end 10 of the hollow cylindrical element 5, opposite the distal end 9, is provided with a further opening 11, communicating with the cylindrical chamber 16, through which a comburent gas and/or gasifying gas, for example air or oxygen, or air enriched with oxygen, can be delivered to the cylindrical chamber 16.

The side surface of the hollow cylindrical body 2 is provided with a plurality of first holes 12, each of which communicates, by a respective connecting conduit 13, with a respective further hole 14, made in the side surface of the hollow cylindrical element 5.

The combustion gas and/or gasifying gas, delivered into the hollow cylindrical element 5 through the further opening 11, passing through the further holes 14, the connecting conduits 13 and the first holes 12, is injected into the gasification apparatus.

The distilled water delivered into the gap 6, through the opening 8, is transformed into steam inside the gap 6, because of the heat transmitted to the injector 1 from inside the gasification apparatus. The steam is delivered into the gasification apparatus through a plurality of second holes 15, made in the side surface of the hollow cylindrical body 2 and arranged alternating with the first holes 12.

The steam that exits the second holes 15, adjacent to the first holes 12, limits the temperature inside the gasification apparatus near the surface of the hollow cylindrical body 2, also in the presence of hot spots, preventing the temperature from reaching the melting temperature of the material of which the hollow cylindrical body 2 is made, and limiting the risk of damage to and excessive deformation of the hollow cylindrical body 2, which would make the injector 1 unusable.

Limiting the temperature inside the gasification apparatus moreover enables the need to manage the formation of hot spots inside the gasification apparatus to be reduced to the advantage of the gasification process.

Further, delivering steam into the gasification apparatus enables the gasification process to be improved via appropriate production of O₂ and H₂ through the effect of the phenomenon of reforming steam from said steam.

## Claims

1. Injector (1) for a gasification apparatus comprising a hollow cylindrical body (2) inside which a hollow cylindrical element (5) is arranged concentrically, inside which a cylindrical chamber (16) is defined, wherein a gap (6) is defined between the hollow cylindrical body (2) and the hollow cylindrical element (5), **characterized in that** the hollow cylindrical body (2) is closed at a distal end (4) and that the hollow cylindrical element (5) is also closed at a distal end (9), wherein a side surface of the hollow cylindrical body (2) is provided with a plurality of first holes (12), each of which communicates with the cylindrical chamber (16) of the cylindrical element (5), and with a plurality of second holes (15) that communicate with the gap (6).

2. Injector (1), according to claim 1, wherein a side surface of said hollow cylindrical element (5) features a plurality of further holes (14) communicating with said cylindrical chamber (16), wherein each further hole (14) of said plurality of further holes communicates with a respective first hole (12) of said plurality of first holes through a respective connecting conduit (13).

3. Injector (1) according to claim 1 or 2, wherein said second holes (15) are arranged alternately with said first holes (12).

4. Injector (1) according to one of the preceding claims, wherein a proximal end (7) of the hollow cylindrical body (2), opposite the distal end (4), features an opening (8), made on the side surface of the hollow cylindrical body (2) and communicating with the gap (6).

5. Injector (1) according to one of the preceding claims, wherein a proximal end (10) of the hollow cylindrical element (5), opposite the distal end (9), features a further opening (11), communicating with the cylindrical chamber (16).

6. Injector (1) according to one of the preceding claims, wherein the hollow cylindrical body (2) features a flange (3), by means of which the injector (1) can be fixed to a wall of a gasification apparatus.

## Patentansprüche

1. Injektor (1) für eine Vergasungsvorrichtung, umfassend einen hohlen zylindrischen Körper (2), in dem ein hohles zylindrisches Element (5) konzentrisch angeordnet ist, in dem eine zylindrische Kammer (16) definiert ist, wobei ein Spalt (6) zwischen dem hohlen zylindrischen Körper (2) und dem hohlen zylindrischen Element (5) definiert ist, **dadurch gekennzeichnet, dass** der hohle zylindrische Körper (2) an einem distalen Ende (4) geschlossen ist und dass das hohle zylindrische Element (5) ebenfalls an einem distalen Ende (9) geschlossen ist, wobei eine Seitenoberfläche des hohlen zylindrischen Körpers (2) mit einer Vielzahl von ersten Löchern (12), von denen jedes mit der zylindrischen Kammer (16) des zylindrischen Elements (5) kommuniziert, und mit einer Vielzahl von zweiten Löchern (15) versehen ist, die mit dem Spalt (6) kommunizieren.

2. Injektor (1) nach Anspruch 1, wobei eine Seitenoberfläche des hohlen zylindrischen Elements (5) eine Vielzahl von weiteren Löchern (14) vorweist, die mit der zylindrischen Kammer (16) kommunizieren, wobei jedes weitere Loch (14) der Vielzahl von weiteren Löchern mit einem jeweiligen ersten Loch (12) der Vielzahl von ersten Löchern durch eine jeweilige Verbindungsleitung (13) kommuniziert.

3. Injektor (1) nach Anspruch 1 oder 2, wobei die zweiten Löcher (15) abwechselnd mit den ersten Löchern (12) angeordnet sind.

4. Injektor (1) nach einem der vorstehenden Ansprüche, wobei ein proximales Ende (7) des hohlen zylindrischen Körpers (2), gegenüber dem distalen Ende (4), eine Öffnung (8) vorweist, die an der Seitenoberfläche des hohlen zylindrischen Körpers (2) hergestellt ist und mit dem Spalt (6) kommuniziert.

5. Injektor (1) nach einem der vorstehenden Ansprüche, wobei ein proximales Ende (10) des hohlen zylindrischen Elements (5), gegenüber dem distalen Ende (9), eine weitere Öffnung (11) vorweist, die mit der zylindrischen Kammer (16) kommuniziert.

6. Injektor (1) nach einem der vorstehenden Ansprüche, wobei der hohle zylindrische Körper (2) einen Flansch (3) vorweist, mittels dem der Injektor (1) an einer Wand einer Vergasungsvorrichtung befestigt werden kann.

## Revendications

1. Injecteur (1) pour un appareil de gazéification comprenant un corps cylindrique creux (2) à l'intérieur duquel un élément cylindrique creux (5) est agencé concentriquement, à l'intérieur duquel une chambre cylindrique (16) est définie, dans lequel un espace (6) est défini entre le corps cylindrique creux (2) et l'élément cylindrique creux (5), **caractérisé en ce que** le corps cylindrique creux (2) est fermé au niveau d'une extrémité distale (4) et **en ce que** l'élément cylindrique creux (5) est également fermé au niveau d'une extrémité distale (9), dans lequel une surface latérale du corps cylindrique creux (2) est pourvue d'une pluralité de premiers trous (12), dont chacun communique avec la chambre cylindrique (16) de l'élément cylindrique (5), et d'une pluralité de seconds trous (15) qui communiquent avec l'espace (6).

2. Injecteur (1) selon la revendication 1, dans lequel une surface latérale dudit élément cylindrique creux (5) présente une pluralité de trous supplémentaires (14) communiquant avec ladite chambre cylindrique (16), dans lequel chaque trou supplémentaire (14) de ladite pluralité de trous supplémentaires communique avec un premier trou (12) respectif de ladite pluralité de premiers trous par un conduit de liaison (13) respectif.

3. Injecteur (1) selon la revendication 1 ou 2, dans lequel lesdits seconds trous (15) sont disposés alternativement avec lesdits premiers trous (12).

4. Injecteur (1) selon l'une des revendications précédentes, dans lequel une extrémité proximale (7) du corps cylindrique creux (2), opposée à l'extrémité distale (4), présente une ouverture (8), pratiquée sur la surface latérale du corps cylindrique creux (2) et communiquant avec l'espace (6).

5. Injecteur (1) selon l'une des revendications précédentes, dans lequel une extrémité proximale (10) de l'élément cylindrique creux (5), opposée à l'extrémité distale (9), présente une autre ouverture (11), communiquant avec la chambre cylindrique (16).

6. Injecteur (1) selon l'une des revendications précédentes, dans lequel le corps cylindrique creux (2) présente une bride (3), au moyen de laquelle l'injecteur (1) peut être fixé à une paroi d'un appareil de gazéification.
